# EUROPEAN PATENT APPLICATION

(11) **EP 0 593 190 A2**
(43) Date of publication of application: **20.04.1994**
(21) Application number: 93307875.0
(22) Date of filing: 04.10.1993
(51) Int. Cl.: G06F 15/20, G06F 3/12, G06K 15/02

(54) **Print processing apparatus**

(30) Priority: 13.10.1992 JP 274506/92
(71) Applicant: BROTHER KOGYO KABUSHIKI KAISHA, Nagoya-shi, Aichi-ken (JP)
(72) Inventor: Kawakami, Yasushi, c/o Brother Kogyo K. K., Nagoya-shi, Aichi-ken (JP)
(74) Representative: Senior, Alan Murray

(57) **Abstract**

When a CSV, (Comma Separated Value Format) mode is set up, document-string data of the CSV type received from an external apparatus on-line is stored in a reception buffer. When data is read from the reception buffer, character data in each print block other than quotation marks (") and commas (,) indicating separation between data are stored in a text memory. When a print format is set up for each stored print block, the data related to the format is stored in the text memory. When, a line-feed code is detected, the characters are printed on a printing tape according to the data related to the format and character data stored in the text memory.

## Description

The invention relates to a print processing apparatus for printing input document data on a printing medium.

There have so far been known print processing apparatuses, of which dot printers are representative ones, that receive document data transmitted from an external apparatus such as a personal computer for printing the document data.

Also known are some types of print processing apparatuses that receive bit map data representing the form pattern of print characters transmitted from such an apparatus as an electronic notebook for printing the characters using, as image data, such data as they are.

However, the above described conventional print processing apparatus, when receiving and printing such data as document-string data having specific identification symbols inserted therein for each predetermined document data, such as data of the type formed of a number of sets of data separated from one another by ('') and (,) (hereinafter, such a data type will be called the CSV (Comma Separated Value Format) type) used for example in data base software, and spread sheet software, could only print the data as a mere monotonous arrangement of character data inclusive of ('') and (,).

It is an aim with the illustrated embodiment to provide a print processing apparatus which, when such document-string data, having specific identification symbols inserted therein for each predetermined document data such as data of the CSV type, can print each document data in a corresponding desired format on a printing medium.

The illustrated embodiment of print processing apparatus
includes input means for inputting document-string data with specific identification symbols inserted therein for each predetermined document data and prints each document data arranged in a desired format on a printing medium, the print processing apparatus comprising format setting means for setting an arbitrary print format corresponding to each document data, format storage means for storing therein the format set up by the format setting means, detection means for detecting the document data by identifying the identification symbols within the document-string data input from the input means, print data preparation means for preparing print data by assigning the format stored in the format storage means to each document data detected by the detection means, and print means for printing the print data prepared by the print data preparation means on a printing medium.

The print processing apparatus further comprises print data storage means for storing therein print data prepared by the print data preparation means.

In the print processing apparatus structured as described above, the input means inputs document-string data with specific identification symbols inserted therein for each predetermined document data, the format setting means sets an arbitrary print format corresponding to each of the input document data, and the format storage means stores therein the format set up by the format setting means.

Further, the detection means detects the document data by identifying the identification symbols within the document-string data input from the input means and the print data preparation means prepares print data by assigning the format stored in the format storage means to each document data detected by the detection means.

Further, the print means prints the print data prepared by the print data preparation means on a printing medium.

In the print processing apparatus, the print data storage means added to the print processing apparatus stores therein print data prepared by the print data preparation means.

As described in the foregoing, the print processing apparatus is adapted such that an arbitrary print format corresponding to each of the document data in the input document-string data is preset by the format setting means, print data is prepared by the print data preparation means from the preset print format and the document data in the document-string data detected by the detection means, and the print data is printed on a printing medium.

Therefore, according to the print processing apparatus it is possible, by inputting document-string data with specific identification symbols inserted therein for each predetermined document data, to print each of the document data arranged in a desired format on a printing medium.

Further, according to the print processing apparatus, since each print format set up by the format setting means is adapted to be stored in the format storage means, it is possible to print document data with different contents in the same printing format repeatedly.

The apparatus also permits print data prepared by the print data preparation means, that is stored in the print data storage means, to be added to the print processing apparatus.

Therefore, according to the print processing apparatus, it becomes possible to repeatedly print the print data which has been prepared once. Further, by making it possible to read out print data from storage and to amend or change each document data and print format in the print data, it can be achieved, without inputting document-string data from the input means anew, to print the document data once input in the same print format and to also print the same document data in different print formats.

The invention will be described with reference to the drawings, in which:
Fig. 1 is an external view of the tape printing apparatus of an embodiment of the invention;
Fig. 2 is a schematic drawing showing the structure of the control system for the tape printing apparatus;
Fig. 3 is a diagram showing operating modes;
Fig. 4 is a diagram showing the transition of the contents of an LCD display when a format setting procedure is executed;
Fig. 5 is a flowchart of the format setting procedure;
Fig. 6 is a flowchart of a format attribute setting processing subroutine executed in the format setting procedure;
Fig. 7 is a flowchart of a detailed setting processing subroutine executed in the format attribute setting processing subroutine;
Fig. 8 is an explanatory diagram explaining a format buffer fb(n);
Fig. 9 shows document-string data generated in and transmitted from an external apparatus;
Fig. 10 is a flowchart of a reception procedure;
Fig. 11 is a flowchart of a printing procedure;
Fig. 12 is a flowchart a format reading processing subroutine executed in the printing procedure;
Fig. 13 is a flowchart showing a print data preparation processing subroutine executed in the printing procedure; and
Fig. 14 is a diagram showing the results of printing by the printing procedure.

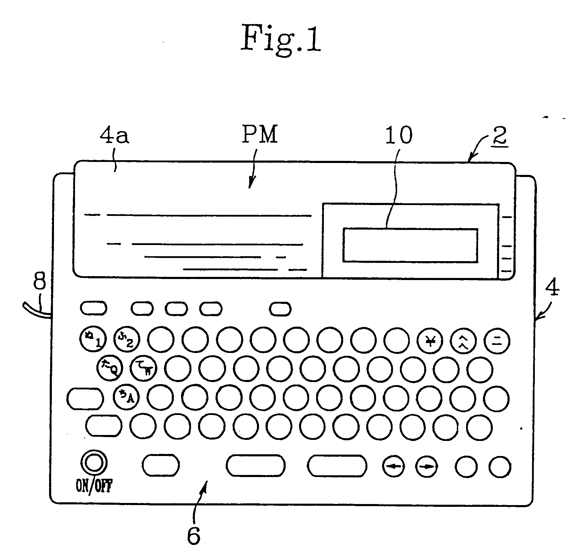

Fig. 1 shows the external appearance of a tape printing apparatus 2 for Japanese language to which an information processing apparatus of the invention is applied. Although the invention is described in the context of a Japanese language apparatus, the language of the apparatus is immaterial.

As shown in Fig. 1, in the front portion of a body frame 4 of the tape printing apparatus 2, there is arranged a keyboard 6. Above the keyboard 6, and inside the body frame 4, there is provided a printing mechanism PM as the printing means for printing characters on a printing tape 8. Above the keyboard 6, and on the surface of the body frame 4, there is provided a curved frame portion 4a. In the curved frame portion 4a, there is provided a small liquid crystal display (hereinafter referred to as "LCD") 10 capable of displaying up to six characters or symbols.

The keyboard 6 contains various keys, such as character keys for inputting, such as alphabetical letters, hiragana, numerals, and symbols, a space key, cursor keys for scrolling the character string displayed on the LCD 10 to the left and right, a non-conversion key, a conversion key, an input mode switching key for alternatively switching to thereby set one character input code out of "romaji," "hiragana," and "alphabet," a format setting key for setting the print format, a print key for executing printing, a tape feed key for feeding the printing tape 8, and a power key for turning the power source ON/OFF.

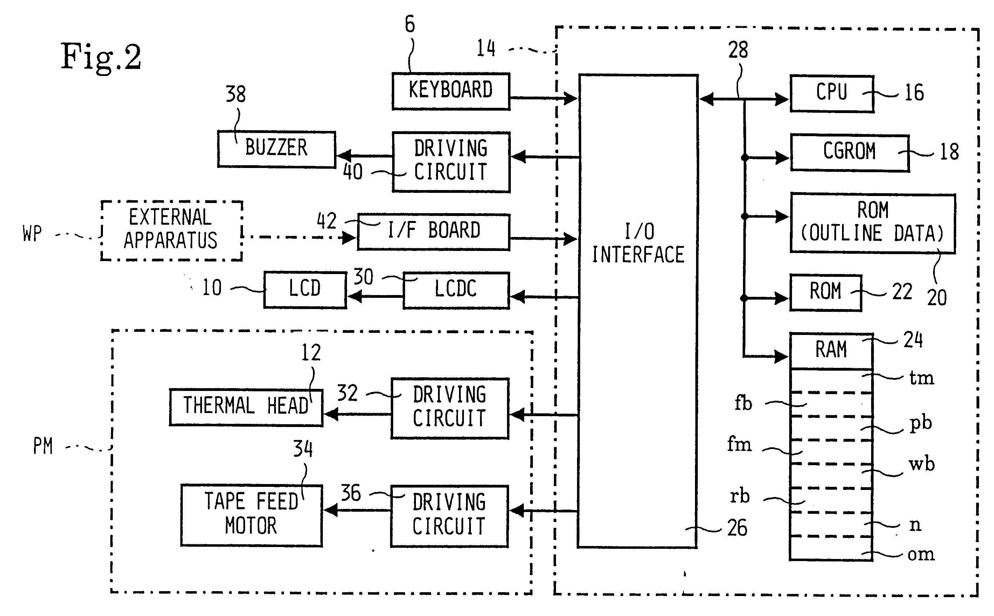

The printing mechanism PM comprises a known thermal head 12 (refer to Fig. 2) which includes a predetermined number of vertically arranged current-heated elements. By supplying a printing tape 8 formed of a transparent film having a predetermined width (for example, 12 mm) and an opposing ink ribbon, to oppose the current conducting thermal head 12 letters or symbols formed of multiple columns of dots are printed on the surface of the printing tape 8. The printing tape 8 thus printed is then provided with a double coated tape adhesively attached thereto and delivered to the outside of the tape printing apparatus through the side face portion of the body frame 4.

The above described printing tape 8, ink ribbon, and double coated tape are integrally stored in a rectangular tape containing cassette, not shown, that is arranged to be easily exchanged.

The control system for the tape printing apparatus 2 will be described with reference to Fig. 2.

As shown in Fig. 2, the controlling circuit 14, which is the core of the control system of the tape printing apparatus 2, comprises a central processing unit (CPU) 16, a pattern data memory (hereinafter referred to as "CGROM") 18, ROMs 20 and 22, a RAM 24, an input/output interface 26, and a bus 28 interconnecting these units.

The input/output interface 26 is also connected to the keyboard 6, a display controller (hereinafter referred to as "LCDC") 30 provided with a display RAM for outputting display data to the LCD 10, a driving circuit 32 for driving the thermal head 12, a driving circuit 36 for driving a feed motor 34 for feeding the printing tape 8 to the outside by rotating a plurality of spools with the printing tape 8, ink ribbon, and double coated tape wound around the same and various rollers, a driving circuit 40 for driving an alarm buzzer 38, and an interface board (hereinafter referred to as "I/F board") 42 as an input means for receiving document data delivered from an external apparatus WP, such as a word processor.

The CGROM 18 stores dot pattern data for displaying each of the characters corresponding to the respective code data and the ROM 20 stores outline data defining the contour of each of the characters to be printed classified according to fonts (e.g., Gothic font and mincho type font) corresponding to the respective code data.

The RAM 24 is divided into various storage areas, such as a text memory tm for storing code data of characters and symbols input from the keyboard 6 as document data; a format buffer fb as format memory means for storing established print format information, such as character size data, font data, and print direction (vertical or lateral); a print buffer pb for storing image-developed dot pattern data of a plurality of characters and symbols; a flag memory fm for storing flag data necessary for various controlling processes; a working buffer wb used in various controlling processes; a receive buffer rb for storing receive data delivered from the external apparatus WP and taken in through the I/F board 42, a counter n for counting the number of print blocks (to be described later); and a registered external character memory om for storing external characters.

At least the text memory tm, the format buffer fb, the flag memory fm, and the registered external character memory are backed up by a power source at all times so that the contents stored therein are not lost.

The ROM 22 stores a display drive controlling program for controlling the LCDC 30 in accordance with code data of various characters, such as letters and symbols, input from the keyboard 6; an image-developing process controlling program for conversion processing of outline data, corresponding to each of the code data stored in the text memory tm, into dot pattern data for printing and stores the image-developed data in the print buffer pb; a print drive controlling program for sequentially reading the data stored in the print buffer pb and driving the thermal head 12 and the tape feed motor 34; a tape print controlling program; an external character registration processing program; a later described format setting processing program characteristic of the invention; and a print processing program for printing the character data in the format set up through the format setting procedure.

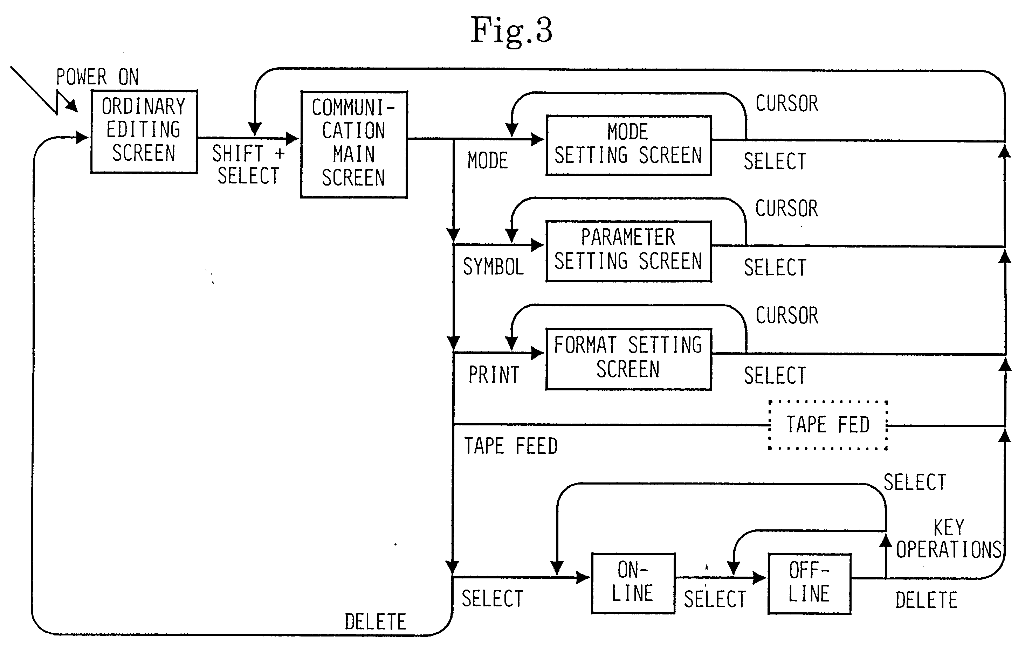

The various operating modes in the tape printing apparatus 2 of the invention will be described with reference to Fig. 3.

As shown in Fig. 3, when the power supply key is turned ON and power is supplied to the tape printing apparatus 2, the LCD 10 first presents an ordinary editing screen so that document data can be created by inputting desired character keys. The ordinary editing screen sequentially displays up to six characters of the input letters or samples on the LCD 10.

If a shift key and a select key are pushed at the same time when the ordinary editing screen is displayed, the display of the LCD 10 changes to present a communication main screen. If, then, a key selected from the mode key, symbol key, print key, tape feed key, and select key is pushed, the mode screen appropriate to the pushed key is presented. When the delete key is pushed, while the communication main screen is displayed, the ordinary editing screen is restored.

When the mode key is pushed, a mode setting screen is presented. As a result, it is possible to select an operating mode from those of: an external character registering mode in which the apparatus receives document data transmitted from the external apparatus WP and produces external characters in accordance with the document data, a CSV mode in which the apparatus receives document-string data of the CSV type transmitted from the external apparatus WP and prints each document data in the document-string data on the printing tape 8 in the print format which was set up using a later described format setting screen, and an ordinary communication mode in which the apparatus receives control data and document data from the external apparatus WP and prints the document data on the printing tape 8 in the print format included in the control data. At this time, one operating mode is selected from the above identified modes using the cursor keys and the selection is finalized using the select key. After the select key is pushed, the communication main screen is restored. The relationship between the cursor keys and the select key remains the same in each of the following modes.

When the symbol key is pushed, a parameter setting screen is presented, in which it becomes possible to set communication parameters such as the communication speed for the document data communication and the data length.

When the print key is pushed, a format setting screen is presented, with which it becomes possible to preset the print format such as character size, print font, and printing direction according to the later described format setting procedure.

When the tape feed key is pushed, only the printing tape 8 is fed a predetermined length.

When the select key is pushed, an on-line state is brought about where a reception process of document data transmitted from the external apparatus WP is started. The received document data is processed in the operating mode set up on the above described mode setting screen.

If the select key is pushed again in the on-line state, an off-line state is brought about, in which the reception process is suspended and each key initiated operation is allowed to be made. If the select key is pushed once again, the on-line state is restored. If the delete key is pushed in the off-line state, the communication main screen is restored.

The following is a description of processing where the CSV mode is set using the mode setting screen.

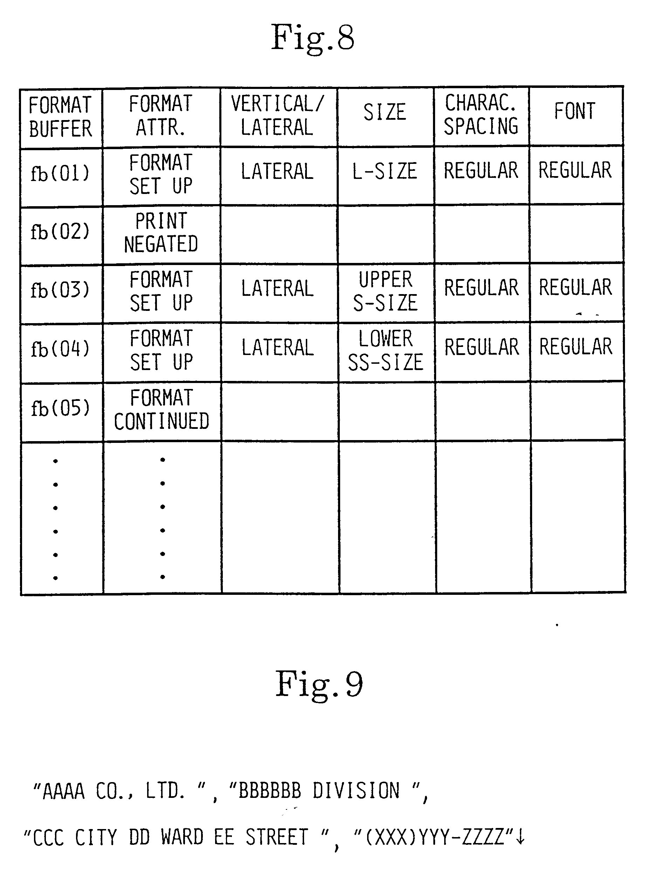

When the tape printing apparatus 2 is set in the CSV mode, the document-string data generated in and transmitted from the external apparatus WP must be data of the CSV type, e.g., as shown in Fig. 9. Each of the document data (there are four document data in Fig. 9) must be sandwiched between quotation marks ('') and separated by a comma (,), and the CSV type data must have a line-feed mark at the end of the data. In the tape printing apparatus 2 of the invention, it is arranged that up to 30 pieces of the document data sandwiched between quotation marks and separated by a comma (hereinafter each such document data will be called a "print block") can be processed at a time.

It is possible to set up a desired print format for each print block of the document-string data transmitted from the external apparatus WP. Setting up of the print format is performed before the operating mode of the apparatus is switched to the CSV mode.

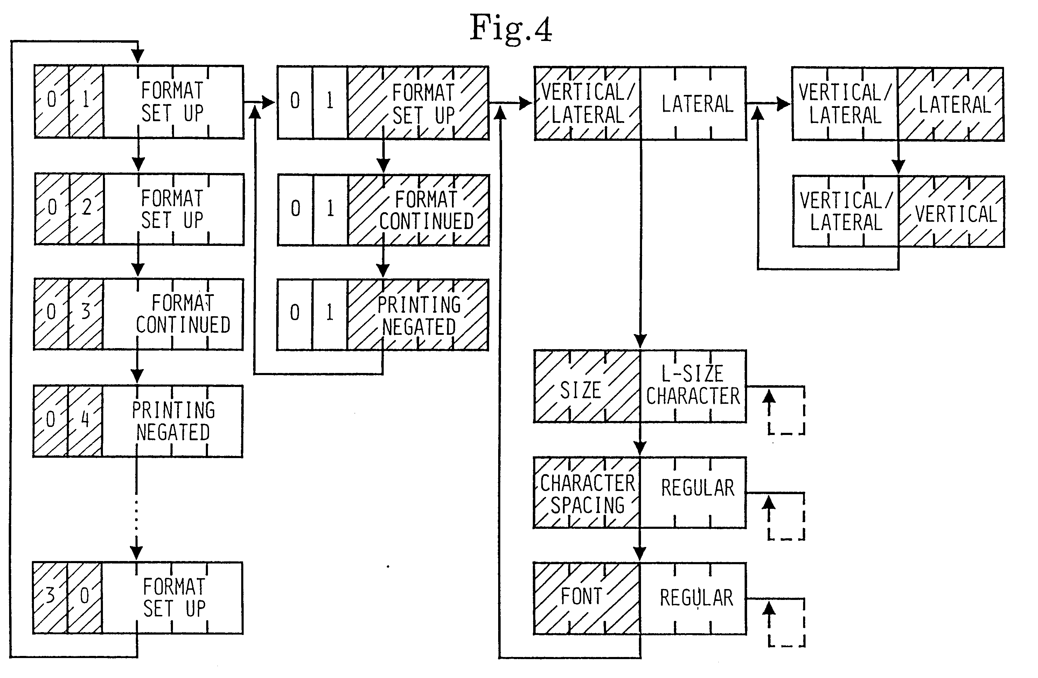

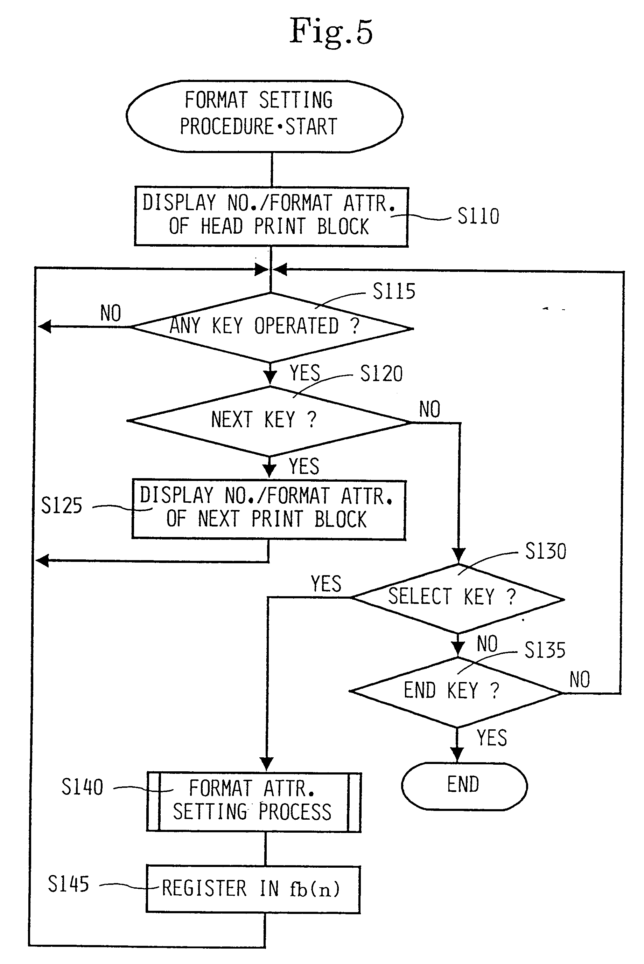

The format setting procedure is performed in the controlling circuit 14 when the above described format setting screen is presented and will be described below with reference to FIG. 4, which shows transition of the displayed screens on the LCD 10, and the flowcharts of Figs. 5 to 8.

Fig. 5 is a flowchart presenting an overview of the format setting procedure. When the format setting procedure is started, as shown in Fig. 5, first, in step (hereinafter "step" will briefly be expressed by "S") 110, the head print block number (01) and the format attribute, which is currently set in the print block, are displayed on the LCD 10 (as shown in the topmost line and in the column at the left side of Fig. 4). The portion in Fig. 4 designated with half-tone dot meshing (represented in the figure by angled lines), indicates that the designated items setting can be changed by a later described key operation.

The format attribute includes three kinds of attributes as shown in Fig. 4, i.e., a "format set up" attribute through which changes in setting the print format, such as the character size and character spacing, can be made; a "format continued" attribute which indicates that the print format set for the immediately preceding numbered print block is used; and a "printing negated" attribute which forbids printing of the print block.

After displaying the format attribute of the print block 01, it is determined in S115 whether a key operation is made. If there has been no key operation, the process in S115 is repeated.

When it is determined in S115 that there was a key operation, S120 follows. In S120, it is determined whether the operated key is the cursor key (hereinafter called the NEXT key). If it is the NEXT key, S125 follows and the next print block number and the format attribute set up for the next print block are displayed. The flow then returns to S115.

When it is determined in S120 that the operated key is not the NEXT key, S130 follows. In S130, it is determined whether the operated key is the select key. When it is determined that the operated key is not the select key, S135 follows. In S135, it is determined whether the operated key is the end key.

If in S135 it is determined that the end key is not operated, the flow returns to S115 and if it is decided in S135 that the end key is operated, the present format setting process is ended.

On the other hand, when it is determined in S130 that the operated key is the select key, S140 follows and, in S140, the flow jumps to a format attribute setting processing subroutine which will be described later. After executing the format attribute setting subroutine, in S145, the content of the setting made in the format attribute setting subroutine is stored in the format buffer fb(n) corresponding to the number n of the currently selected print block. Flow then returns to S115 and the processing from S115 to S145 is repeated.

Through execution of the format setting procedure, the numbers of print blocks are sequentially displayed on the LCD 10, as shown in the column at the left end of Fig. 4, as the NEXT key is operated and, by operation of the select key, the number of the print block of which the format attribute, and further, the print format, that the operator desires to change is determined. Further, the details of the print format for the designated print block can be set using the later format attribute setting processing subroutine (to be described).

Further, the procedure is such that even if an operating key not related to the selection of the print block number, that is, one other than the NEXT key, select key, and end key in the present case, is operated by mistake in the processing in S115, S120, S130, and S135, nothing happens.

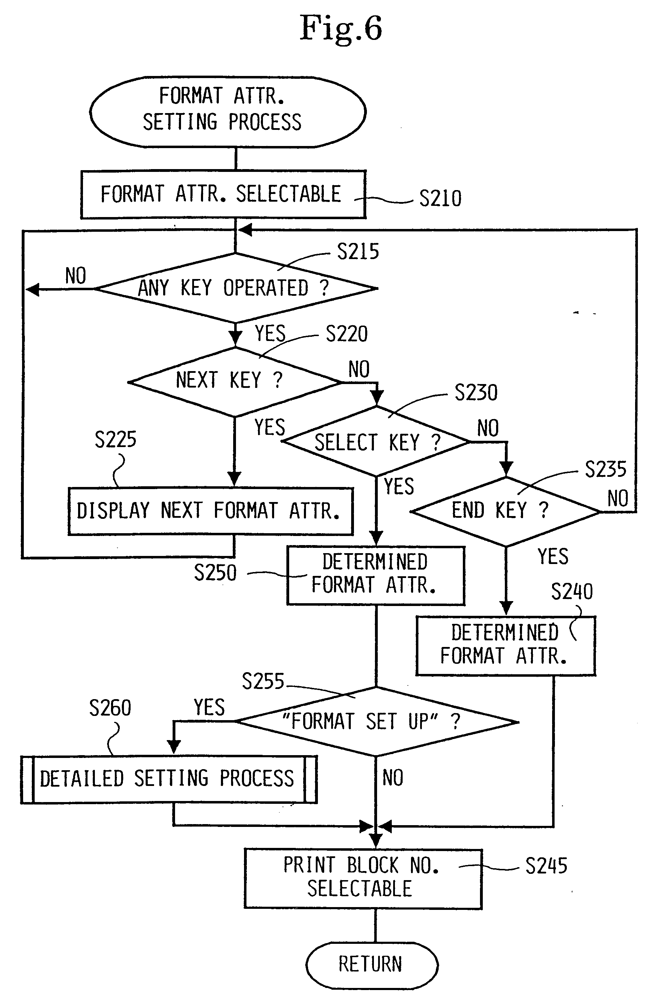

Fig. 6 is a flow chart of the format attribute setting processing subroutine executed in S140 of the format setting procedure.

As shown in Fig. 6, when execution of the subroutine is started, in S210 the half-tone dot meshing shown on the LCD 10 is shifted from the portion indicating the print block number, selected in S130 of the format setting procedure, to the portion indicating the format attribute currently set in the print block as shown in the second column from the left of Fig. 4. Thus, a state where the format attribute may be selected is established.

In S215 it is determined whether a key operation has been made if no key operation has been made, the processing in S215 is repeated until a key operation is detected.

When, in S215, it is decided that a key operation has been made, 5220 follows. In S220, it is determined whether the operated key is the NEXT key. If it is the NEXT key, S225 follows and the next format attribute is displayed. For example, if the previous format attribute was "format set up", then "format continued" is now the displayed attribute. The flow then returns to S215.

If in S220, it is determined that the operated key is not the NEXT key, S230 follows. In S230, it is determined whether the operated key is the select key. If the operated key is not the select key, S235 follows and it is determined whether the operated key is the end key.

When it is decided in S235 that the operated key is not the end key, the flow returns to S215. Conversely, if the operated key is determined to be the end key, the flow advances to S240.

In S240, the format attribute is determined by recognizing the format attribute that is currently displayed on the LCD 10 as the format attribute to be stored in the format buffer fb(n) in S145 of the format setting procedure. Then, in S245, the half-tone dot meshing is shifted from the indicating portion of the format attribute to the indicating portion of the print block number, so that the state where the print block number is selectable is restored and the subroutine ends.

On the other hand, if it is decided in S230 that the operated key is the select key, S250 follows and the format attribute is determined by recognizing the format attribute currently displayed on the LCD 10 as the format attribute to be stored in the format buffer fb(n) in S145 of the format setting procedure.

In the following S255, it is determined whether the format attribute determined in S250 is "format set up". If it is decided that the format attribute is not "format set up", i.e., it is decided the format attribute is to be either "format continued" or "printing negated", S245 follows. In S245, the state where the print block number is selectable is restored and the subroutine ends.

When it is decided in S255 that the format attribute determined in S250 is "format set up", S260 follows. In S260, the flow jumps to a detailed setting processing subroutine to be described. After executing the detailed setting processing subroutine, the flow advances to S245 and the state where the print block number is selectable is restored and the subroutine ends.

Through execution of the subroutine, the format attributes corresponding to the currently selected print blocks are sequentially displayed on the LCD 10 as shown in the second column from the left of Fig. 4 by the operation of the NEXT key. The desired format attribute is determined by the operation of the select key or the end key. Further, when "format set up" is selected by the select key, the detailed setting processing subroutine enabling detailed format setting is executed.

Further, even if an operating key not related to the selection of the print attribute in the processing of S215, S220, S230, and S235 is operated by mistake, there is no effect.

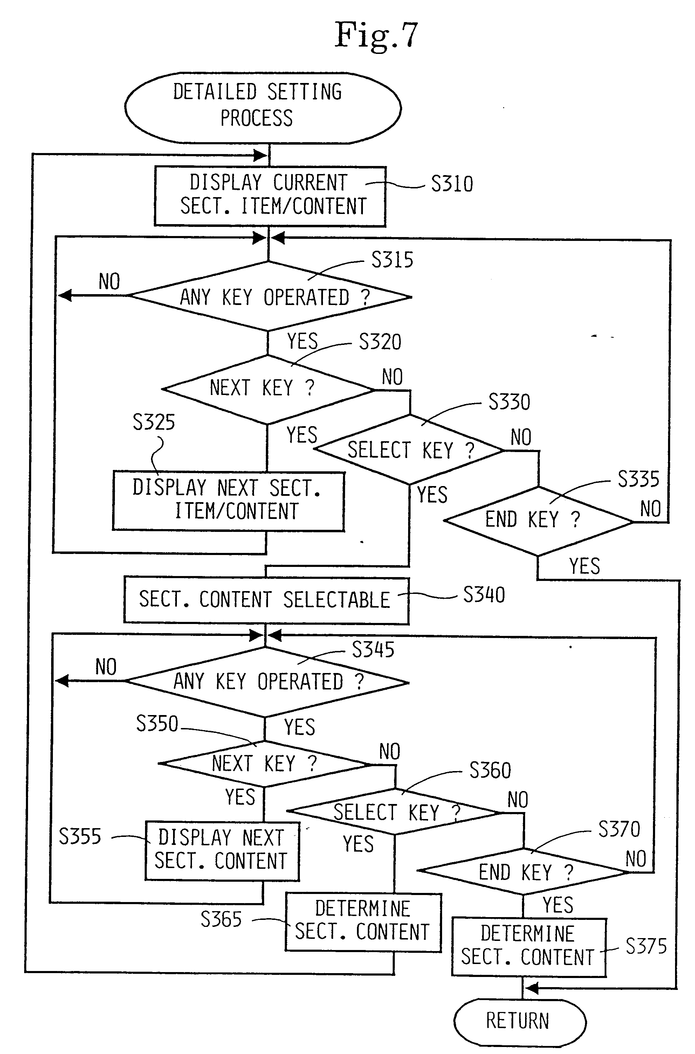

Fig. 7 is a flowchart showing the detailed setting processing subroutine executed in S260 of the format attribute setting processing subroutine. In S310, the item of setting and the current content of the item of setting are displayed on the LCD 10 as shown in the second column from the right of Fig. 4. The portion to which the half-tone dot meshing is applied is the side of the item of setting and, in this state, the item of setting is selectable.

The items of setting here mean the items of detailed print format used when the print block is printed and they include four items, i.e., vertical/lateral, size, character spacing, and font.

After an item of setting and the content of the item of setting have been displayed on the LCD 10, in S315 it is determined whether a key operation has occurred. When no key operation has occurred, the processing in S315 is repeated until a key is operated.

On the other hand, when it is determined in S315 that a key operation has occurred, S320 follows. In S320, it is determined whether the operated key is the NEXT key. If it is the NEXT key, S325 follows and the next item of setting (for example, "size," if the preceding item of setting was "vertical/lateral") is displayed and the flow returns to S315.

When it is determined in S320 that the operated key is not the NEXT key, S330 follows and in S330 it is determined whether the operated key is the select key. If it is determined that it is not the select key, S335 follows and it is determined whether the operated key is the end key.

If it is determined in S335 that the operated key is not the end key, the flow returns to S315. Conversely, if it is determined to be the end key, the subroutine ends.

When it is decided in S330 that the operated key is the select key, S340 follows. In S340, the display of the half-tone dot meshing on the LCD 10 is shifted from the indicating portion of the item of setting to the indicating portion of the content of setting, as shown in the column at the right side of Fig. 4, so that the state where the content of setting can be selected is established.

In S345, it is determined whether any key operation is made, and when there has been no key operation, the process in S345 is repeated.

On the other hand, when it is decided in S345 that some key operation has occurred, S350 follows. In S350, it is determined whether the operated key is the NEXT key. When it is the NEXT key, S355 follows and the next content of setting is displayed in the currently selected item of setting (for example, if the previous selection was "lateral" while "vertical/lateral" is the item of setting, then "vertical" will be the displayed selection at this time) and the flow returns to S345.

When it is decided in S350 that the operated key is not the NEXT key, S360 follows. In S360, it is determined whether the operated key is the select key. When it is determined to be the select key, the content of setting is selected by recognizing the content of setting in the item of setting currently displayed on the LCD 10 as the content of setting to be stored in the format buffer fb(n) in S145 of the format setting procedure and the flow returns to S310.

On the other hand, when it is determined in S360 that the operated key is not the select key, S370 follows. In S370, it is determined whether the operated key is the end key. When the operated key is determined not to be the end key in S370, the flow returns to S345 but when, conversely, it is determined to be the end key, the flow directly advances to S375.

In S375, as in S365, the content of setting is selected by recognizing the content of setting in the item of setting currently displayed on the LCD 10 as the content of setting to be stored in the format buffer fb(n) in S145 of the format setting procedure and the subroutine ends.

Thus, in the subroutine, through the processing in S310 to S335, the item of setting is designated with the NEXT key and the item of setting that is to be changed is determined with the select key as shown in the second column from the right side of Fig. 4. Then, through the processing of S340 to S375, the content of setting for the selected item of setting is designated with the NEXT key and the content of setting that is to be set up is selected with the select key or the end key as shown in the column at the right side of Fig. 4. Further, the next item of setting can be selected with the NEXT key only when the content of setting has been established by the select key.

In the subroutine, even if an operation key not related to the setting of format is operated by mistake in the processing of S315, S320, S330, and S335, as well as in S345, S350, S360, and S370, no effect is produced.

By performing the format setting procedure shown in Figs. 5-7 as described above, it is possible to store format data corresponding to each of the print block numbers (n) into the respective format buffers fb(n) as shown in Fig. 8.

In S145 of the format setting procedure, when the format attribute is set to "format continued," or to "printing negated," there is no detailed format data stored in the format buffer fb(n) corresponding to the print block. In the case where the format attribute is "format continued," the format set in the directly preceding print block is used in the current print block and, hence, there is no need for storing the format data therein. In the case where the format attribute is "printing negated," no format data is required as there will be no printing.

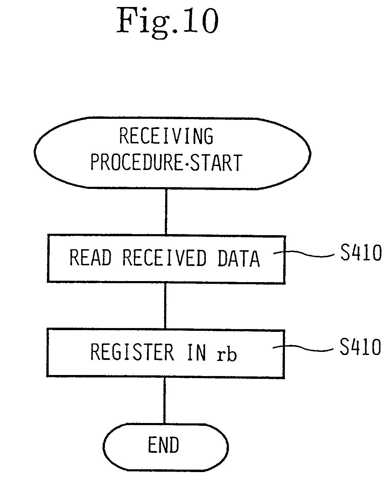

The printing procedure performed in the controlling circuit 14, when the CSV mode is set up on the above described mode setting screen, will be described with reference to Figs. 10-14.

Fig. 10 is a flow chart showing the procedure for receiving document-string data which is performed in the above described on-line state when the operating mode of the apparatus is set to the CSV mode. The present reception procedure is an interrupt process to be preferentially performed when document-string data transmitted from the external apparatus WP is received.

When the reception procedure is started, as shown in Fig. 10, in S410 the received document-string data (hereinafter called received data) is read. In S415, the document-string data read in S410 are stored in succession into the reception buffer rb and the present reception procedure ends.

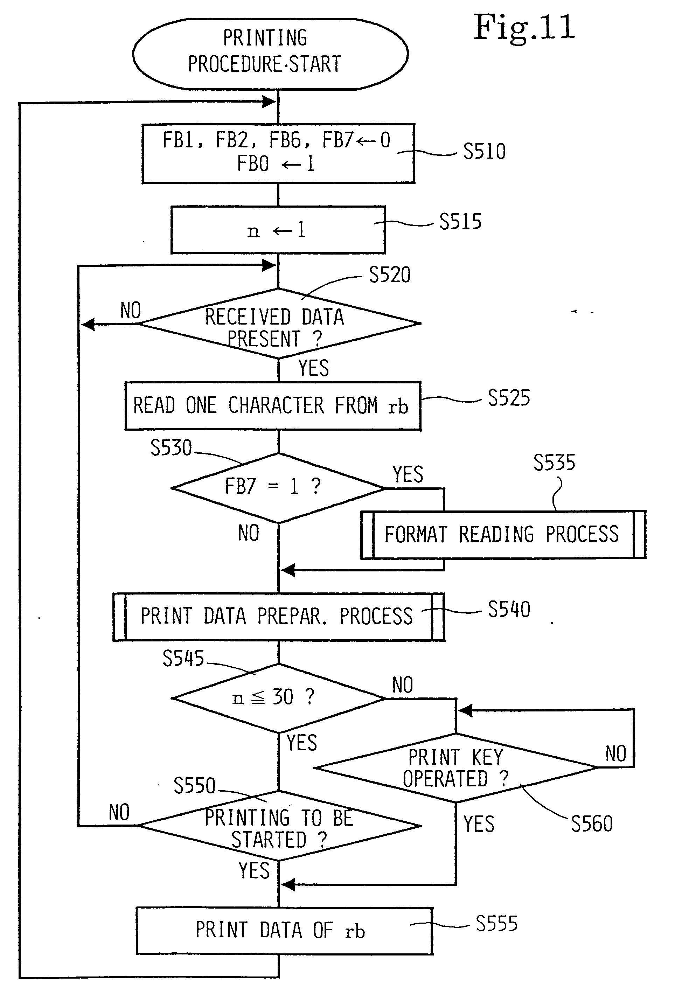

Fig. 11 is a flow chart showing the printing procedure in which each of the document data for each of the print blocks is detected from the received data stored in the reception buffer rb and the document data is printed on a printing tape 8 in the desired format for each print block established in the described format setting procedure. This printing procedure is performed in the on-line state.

Control flags FB0, FB1, FB2, FB6, and FB7 used in the flowcharts of Figs. 11-13 have their flag data stored in the flag memory fm. FB0 indicates that quotation marks ('') indicating the start of a print block is expected of the next data, FB1 indicates that quotation marks ('') indicating the end of the print block is expected of the next data, FB6 indicates negating printing, and FB7 indicates transferring a format from the format buffer fb to the text memory tm.

When the printing procedure is performed as shown in Fig. 11, in S510, the flags FB1, FB2, FB6, and FB7 are reset (to 0) and the flag FB0 is set to 1. In S515, the counter n is set equal to 1 for counting the number of print blocks.

In S520, it is determined whether the received data is in the reception buffer rb. When it is decided that there is no received data therein, the processing in S520 is repeated until received data is detected.

When, in the course of time, document-string data is received through the above described reception procedure and it is determined in S520 that there is received data, S525 follows. In S525, just one character is read from the reception buffer rb and the read character is taken into the working buffer wb.

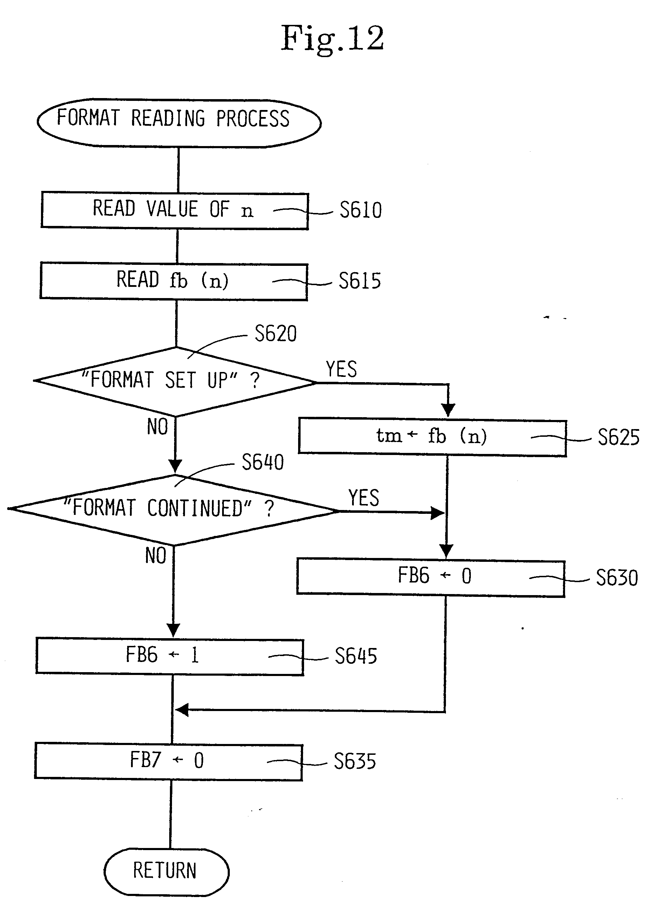

In S530, it is determined whether the flag FB7 is 1. When the flag FB7 is 1, S535 follows and the flow jumps to a format reading processing subroutine (Fig. 12). After the format reading processing subroutine has been executed, the flow advances to S540.

As described later in detail, in the format reading processing subroutine, data related to the print format stored in the format buffer fb(n) corresponding to the current value of the counter n is copied into the text memory tm and various control flags are set or reset according to the current format attribute.

When the flag FB7 is determined not to be 1 in S530, the flow directly moves to S540.

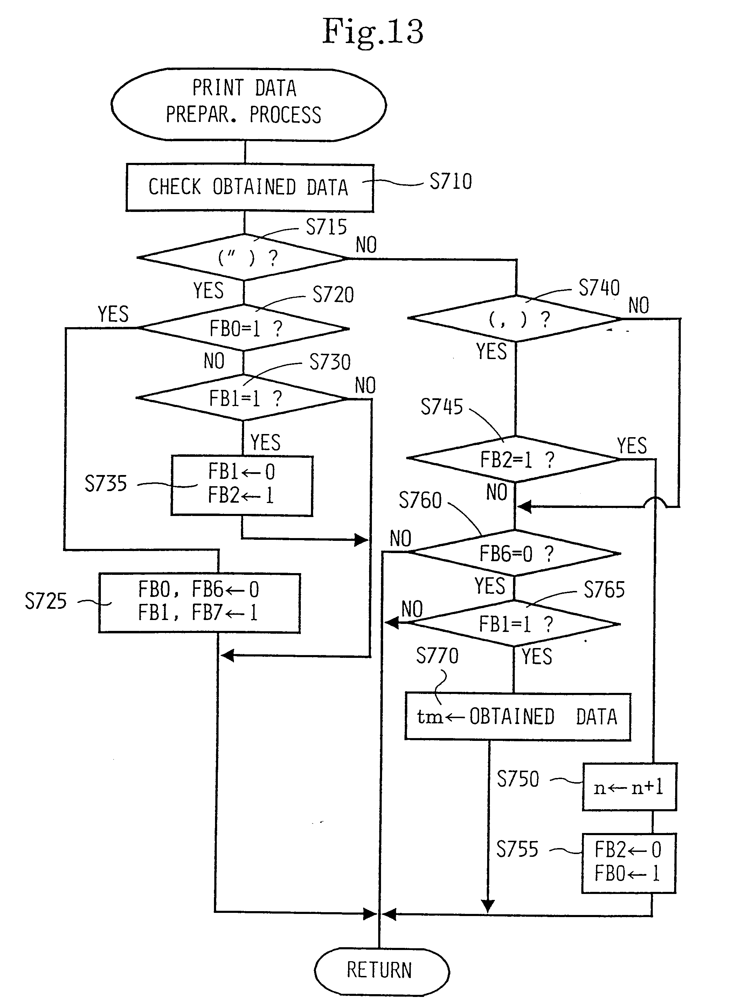

In S540, the flow jumps to a print data preparation processing subroutine (Fig. 13) and, after the print data preparation processing subroutine has been executed, the flow advances to S545.

As described later in detail, in the print data preparation processing subroutine a print block is detected by identifying quotation marks ('') and a comma (,) within the data obtained in S525 and only the data within the print block is transferred to the text memory tm. Also in this subroutine, while various control flags are set and reset, the number of print blocks is counted by incrementing the counter n when quotation marks ('') and a comma (,) in succession are received.

In S545, it is determined whether the value of the counter n is less than or equal to 30. When it is determined to be less than or equal to 30, S550 follows. In S550, it is determined whether printing should be started by judging whether the data obtained in S525 is the line-feed mark. When it is judged that the data is not the line-feed mark, i.e., printing is decided not be started, the flow returns to S520 and the processing from S520 is repeated.

When it is judged that the data obtained in S525 is the line-feed mark, i.e., when printing is to be started, the flow advances to S555. In S555, print data formed of the data related to the print format copied into the text memory tm, through the format reading processing subroutine in S535 and the character data transferred to the text memory tm through the print data preparation processing subroutine in S540, is transferred as dot data to the print buffer pb. The dot data in the print buffer pb is printed on the printing tape 8. After all data are printed in S555, the text memory tm and the print buffer pb are cleared and the flow returns to S510.

On the other hand, when the value of the counter n is determined to be greater than 30 in S545, the flow moves to S560 and it is determined whether the print key on the keyboard 6 was pushed. When it is determined that the print key was not pushed, the processing in S560 is repeated. Conversely, when it is determined that the print key was pushed, the flow moves to S555 and printing is started the same as described above.

During the execution of the print processing routine, the CPU 16 is monitoring whether the select key is operated. At the time when the select key is depressed, the printing procedure is stopped and the off-line state is brought about so that each key may be operated.

Fig. 12 is a flow chart showing the format reading processing subroutine that is executed in S535 of the printing procedure.

When execution of this subroutine is started, as shown in Fig. 12, in S610, the value of the counter n is read. In the following S615, the content of the format buffer fb(n) corresponding to the value of the counter n is read.

In S620, it is determined whether the current format attribute is "format set up" and, if it is "format set up", the flow moves to S625.

In S625, the data related to the print format stored in the format buffer fb(n) is copied into the text memory tm. Thus, in S630, the flag FB6 is cleared, and in S63S, the flag FB7 is cleared. After the processing in S635 has been performed, the subroutine ends.

On the other hand, if the format attribute is determined in S620 not to be "format set up", S640 follows. In S640, it is determined whether the current format attribute is "format continued". When the format attribute is determined not to be "format continued", the format attribute is judged to be "printing negated". Hence, the flow advances to S645 and the flag FB6 is set. Then the flow advances to S635 where the flag FB7 is cleared and then the subroutine ends.

When the format attribute is determined in S640 to be "format continued", the flow moves to S630 where the flag FB6 is cleared. The flow then moves to S635 where the flag FB7 is cleared and the subroutine ends.

As described above, this format reading process subroutine is executed only when the flag FB7 is set (i.e., when the data at the head of each print block is obtained) in the printing procedure of Fig. 11. When the format attribute is "format set up", the data related to the print format stored in the format buffer fb(n) is copied into the text memory tm and then the flags FB6 and FB7 are cleared, when the format attribute is "printing negated", only the setting of the flag FB6 and the resetting of flag FB7 are performed, and when the format attribute is "format continued", only the clearing of the flags FB6 and FB7 is performed.

Fig. 13 is a flowchart showing the print data preparation processing subroutine executed in S540 of the printing procedure.

When the execution of the subroutine is started, as shown in Fig. 13, in S710, the data obtained in S525 of the printing procedure of Fig. 11 is read and the obtained data is checked. In S715, it is determined whether the obtained data is a quotation mark (''). When the data is determined to be a quotation mark (''), it is determined in S720 whether the flag FB0 is 1. When the flag FBO is determined to be 1 in S720, the flow moves to S725, the flags FB0 and FB6 are cleared and the flags FB1 and FB7 are set and then the subroutine ends.

When the flag FB0 is determined in S720 not to be 1, S730 follows and it is determined whether the flag FB1 is 1. When the flag FB1 is 1, S735 follows. In S735, the flag FB1 is cleared and the flag FB2 is set and the subroutine ends. When the flag FB1 is not 1 in S730, the subroutine ends.

On the other hand, when the obtained data is determined in S715 not to be a quotation mark (''), the flow moves to S740 where it is determined whether the obtained data is a comma (,). When the obtained data is determined to be a comma (,), S745 follows and it is determined whether the flag FB2 is 1. When the flag FB2 is 1, the flow moves to S750 and the counter n is incremented by 1. In the following S755, the flag FB2 is cleared and the flag FB0 is set and the subroutine ends.

When the flag FB2 is determined in S745 not to be 1, S760 follows. In S760, it is determined whether the flag FB6 is 0 and, when the flag FB6 is 0, S765 follows. In S765, it is determined whether the flag FB1 is 1. When the flag FB1 is determined to be 1, the obtained data is transferred, in S770, to the text memory tm and, thereupon, the subroutine ends. On the other hand, when the flag FB6 is determined in S760 not to be o, or when the flag FB1 is determined in S765 not to be 1, the subroutine directly ends.

Further, when the obtained data is determined in S740 not to be a comma (,), the flow moves to S760 and the above described processing in S760 to S770 is performed.

In the print data preparation process subroutine described above, when it is determined that the obtained data is a quotation mark ('') and the flag FB0 is 1 through the processing in S715 and S720, it is recognized that the data quotation mark ('') is that data indicating the start of a print block and, in S725, the flags FB0 and FB6 are cleared and the flag FB1 is set, when a quotation mark ('') is encountered the next time, the data can be recognized as that indicting the end of the print block through the processing in S715, S720, and S730. Further, the flag FB7 is also set in S725, whereby, in the printing procedure of Fig. 11 (S535) performed the next time, the format reading processing subroutine of Fig. 12 is executed and the print format corresponding to the current print block is copied into the text memory tm.

When the obtained data is determined to be a quotation mark ('') and the flag FB1 is decided to be 1 through the processing in S715, S720, and S730, the data quotation mark ('') is recognized as that indicating the end of the print block and, in S735, the flag FB1 is cleared and the flag FB2 is set, whereby when a comma (,) is encountered next, the data is judged not to be mere character data but data indicating separation between print blocks through the processing in S715, S740, and S745.

Further, when it is determined that the obtained data is a comma (,) and the flag FB2 is 1 through the processing in S715, S740, and S745, the data comma (,) may be recognized not as mere character data but as that indicating separation between print blocks and, in the following S750, the counter n is incremented, whereby the number of the print block processed by the format reading processing subroutine of Fig. 12 is updated. In the following S755, the flag FB2 is cleared and the flag FB0 is set, so that, when a data comma (,) is encountered the next time, it may be judged to be that indicting the start of a print block through the processing in S715 and S720.

Further, when it is determined that the obtained data is a comma (,), the flag FB6 is 0 and the flag FB1 is 1, through the processing in S715, S740, S760, and S765, or when it is determined that the obtained data is neither a quotation mark ('') nor a comma (,) through the processing in S715 and S740, the obtained data is not recognized as an identification symbol but as a piece of print data within the print block and, hence, the obtained data is transferred to the text memory tm in S770 and printed on the printing tape 8 in the printing procedure of Fig. 11 (S555).

As described above, in the printing procedure shown in Figs. 11-13, the processing of S710 to S765 of the print data preparation processing subroutine functions as a detection means, while the processing in S625 of the format reading processing subroutine and S770 of the print data preparation processing subroutine functions as print data preparation means.

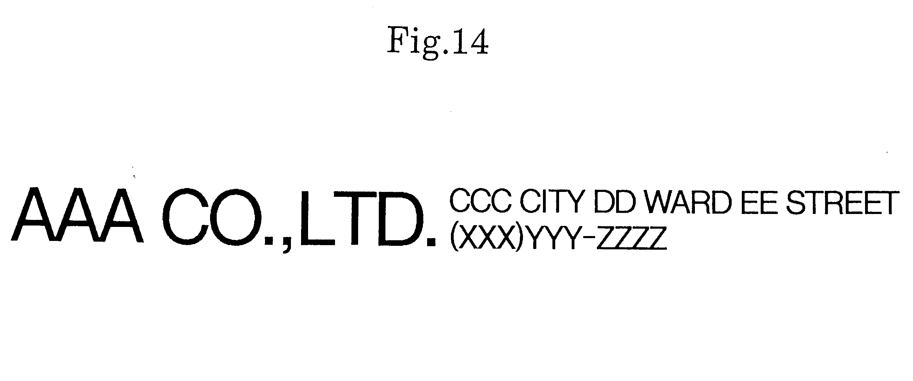

When the print format of each print block is set up and stored, as shown in Fig. 8, if document-string data of the CSV type as shown in Fig. 9, is transmitted from the external apparatus WP and the printing procedure is performed, then, each of the printing blocks are printed on the printing tape 8 as shown in Fig. 14.

In the tape printing apparatus 2 as described above, after desired print formats for each of print blocks are set up through the format setting procedure and document-string data of the CSV type generated in and transmitted from the external apparatus WP is received, that by identifying quotation marks ('') and commas (,) within the received data by the print data preparation processing subroutine in the printing procedure, the print blocks to be actually printed are detected and the print blocks thus detected are printed on the printing tape 8 in the preset desired print formats.

Accordingly, by the use of the tape printing apparatus 2 of the invention, it is possible to print document-string data of the CSV type generated by an external apparatus WP in a desired print format for each of the document data. Further, since the set print formats are stored in the format buffer fb with backup power provided, document data having different contents can be printed over again in the same print formats.

Although, in the case where document-string data of the CSV type is received and each document data in the document-string data is converted to print data in a set print format so as to be directly printed was described, it may also be that print format data and document data are stored and preserved in the text memory tm.

For example, although in the tape printing apparatus 2 the text memory tm is cleared after the printing is finished in the processing in S555, the storage capacity of the text memory tm may be increased so that the processing from S510 will be performed without clearing the text memory tm after the printing has been finished.

It may further be that either a print mode in which print data are directly printed in the on-line state, shown in Fig. 3, or a preserve mode to preserve the print data may be chosen before receiving document-string data from an external apparatus WP. Then, if the preserve mode is chosen in the on-line state, the printing process shown in Fig. 11 may be skipped.

According to the tape printing apparatus 2 described above, because data related to the print format and document data are stored in the text memory tm, it is possible, after bringing about an off-line state by operating the select key, to make changes in the print format and document data. It is also possible to print repeatedly on the printing tape 8 by operating the print key. More specifically, it is possible to perform editing functions, such as additions, deletions and changes in the document data of the CSV type received from an external apparatus WP the same as is done in document data produced by using the keyboard.

## Claims

1. A print processing apparatus including input means for inputting document-string data with specific identification symbols inserted therein for each predetermined document data and printing each document data arranged in a desired format on a printing medium, the print processing apparatus comprising:
format setting means for setting a print format corresponding to each document data;
format storage means for storing therein the format set up by said format setting means;
detection means for detecting the document data by identifying said identification symbols within the document-string data input from said input means;
print data preparation means for preparing print data by assigning the format stored in said format storage means to each document data detected by said detection means; and
print means for printing the print data prepared by said print data preparation means on a printing medium.

2. The print processing apparatus as claimed in claim 1, further comprising print data storage means for storing therein print data prepared by said print data preparation means.

3. A printing apparatus having an input device connected thereto for inputting data strings, the data strings at least one data element, comprising:
formatting means for setting print formats for each data element;
format memory means for storing the formats established by said format setting means;
separation means for identifying each data element in the data string and separating them one from the other;
data preparation means for assigning the appropriate format stored in said format storing means to each data element defined by said separation means; and
print means for printing the print data.

4. The print processing apparatus as claimed in claim 3, further comprising print data storage means for storing print data prepared by said data preparation means.

5. A print processing apparatus comprising:
input means for inputting document string data including at least one element data, each element data having a specific symbol;
detection means for detecting the element data by identifying the specific symbol;
element data storage means for storing the element data except the specific symbol based on the detection by said detection means;
format setting means for setting a print format corresponding to each element data;
format storage means for storing the print format set by said format setting means; and
print means for printing the element data on a printing medium by combining the element data stored in said element data storage means with the print feature stored in said format storage means.

6. The print processing apparatus as claimed in claim 5, further comprising print data storage means for storing print data prepared by said format setting means.

7. The print processing apparatus as claimed in any of claims 3 to 6, wherein each data element is identified by a lead quotation mark and a trail quotation mark and a comma such that said separation means can identify a beginning and an end of a data element.

8. The print processing apparatus as claimed in any of claims 3 to 7, wherein said format memory means is arranged to store a format for a first data element in a data string where there exists a series of data elements that have the same format and to store a repeat indicator for the data elements subsequent to the first data element in the series.

9. The printing apparatus as claimed in any of claims 3 to 8, wherein the print format set by said format setting means is one from the group consisting of establishing a format, negating printing, and indicating the format is as with the preceding data element.

10. The print processing apparatus as claimed in any of the preceding claims, wherein said means for setting a print format provides means for setting a print direction, a character size, a character spacing, and a font.

11. The print processing apparatus as claimed in claim 10, wherein said print direction is a one of vertical printing and lateral printing.
